Europäisches Patentamt

European Patent Office

Office européen des brevets

(11) Publication number: **0 170 411**
A1

# EUROPEAN PATENT APPLICATION

(21) Application number: 85304622.5

(22) Date of filing: 28.06.85

(51) Int. Cl.⁴: **H 01 M 4/62**
H 01 M 4/54, H 01 M 6/04
C 01 B 31/04

(30) Priority: 29.06.84 US 626103

(43) Date of publication of application:
05.02.86 Bulletin 86/6

(84) Designated Contracting States:
BE CH DE FR GB LI

(71) Applicant: UNION CARBIDE CORPORATION
39 Old Ridgebury Road
Danbury Connecticut 06817(US)

(72) Inventor: Mansfield, Robert Nile, Jr.
5841 Edgehill Drive
Parma Heights Ohio 44130(US)

(74) Representative: Gore, Peter Manson et al,
W.P. THOMPSON & CO. Coopers Building Church Street
Liverpool L1 3AB(GB)

(54) Galvanic cell.

(57) Galvanic cells having a cathode comprised of silver oxide and an alkaline electrolyte which employ vermiform expanded graphite (i.e. graphite "worms") as a conductive material exhibit improved performance relative to cells employing other forms of graphite of equal purity as less conductive material is required in such vermiform graphite-containing cells.

F I G. 3

It has now been found possible to provide an alkaline silver oxide cell which requires lower levels of conductive material relative to cells employing finely divided graphite as a conductive additive to the cathode, particularly a galvanic cell having a cathode comprising silver oxide and an alkaline electrolyte, which cathode further comprises a minor amount of vermiform graphite.

According to the present invention there is provided a galvanic cell having an alkaline electrolyte, an anode, and a cathode comprising silver oxide, characterized in that the cathode further comprises a minor amount of vermiform expanded graphite.

Thus, the present invention relates to an alkaline silver oxide cell having a minor amount of vermiform expanded graphite (i.e., graphite "worms") employed as a conductive binder in the cathode. The use of this conductive binder allows for increased amounts of active cathode material to be placed within the cell as smaller amounts of such binder are required to provide suitable conductivity. Moreover, when this conductive binder material is employed in cells having cathodes comprised of divalent silver oxide, such cells exhibit improved pulse performance relative to identical cells employing particulate or flaked graphite of the same purity.

Vermiform expanded graphite (i.e. graphite "worms") is an intermediate product of the process described in U.S. Patents Nos. 3,404,061 and 3,494,382. Specifically, vermiform expanded graphite is a graphite material which has been expanded in its "c" direction at least about 80 times and preferably about 200 times. In general, this expanded graphite material is formed by interlayer attack on particulate graphite in strong oxidizing media at elevated temperatures.

## DESCRIPTION
## GALVANIC CELL.

The present invention relates to a galvanic cell, particularly such a cell having a cathode comprising silver oxide.

The increasing miniaturization of many portable battery-powered devices has led to a demand for high energy galvanic cell systems. Among the more effective of the systems developed is that employing a cathode comprising silver oxide (monovalent or divalent), an alkaline electrolyte, and a suitable anode material.

However, a problem which has long been recognized regarding the use of silver oxide is that this material is a relatively poor conductor. Consequently, when higher current drains are required, particularly where the cell is required to exhibit desirable pulse performance, it is necessay to incorporate a conductive material into silver oxide cathodes. The use of particulate graphite as such a conductive material in silver oxide cells is known in the art. Thus, for example, U.S. Patent 2,829,189 discloses a cathode for use in an alkaline dry cell, which cathode may comprise silver oxide and 5 to 15 weight percent of a "suitable" conductive substance such as micronized graphite.

However, while the employment of micronized or other finely divided, e.g. flaked, graphite will improve the conductivity in alkaline silver oxide cells, relatively high levels of such conductive material are required for effective cell operation. Therefore, it would be desirable to provide a silver oxide cell which required lower levels of conductive material and which therefore contained greater amounts of active cathode material.

In general, vermiform graphite is produced by the chemical treatment of natural graphite or heat treated pyrolytic graphite particles. The graphite particles utilized can range in size from a dust or fine powder small enough to pass through a 325 mesh screen to a size such that no dimension is greater than about one inch.

Interlayer attack of graphite particles is preferably achieved by subjecting the graphite particles to oxidizing conditions. Various oxidizing agents and oxidizing mixtures may be employed to effect controlled interlayer attack. For example, there may be utilized nitric acid, potassium chlorate, chromic acid, potassium permanganate, potassium chromate, potassium dichromate, perchloric acid and the like, or mixtures of such as, for instance, concentrated nitric acid and potassium chlorate, chromic acid and phosphoric acid, sulfuric acid and nitric acid, etc., or mixtures of a strong organic acid, e.g. trifluoroacetic acid and a strong oxidizing agent soluble in the organic acid used. A wide range of oxidizing agent concentrations can be utilized. Oxidizing agent solutions having concentrations ranging from 0.1 N to concentrated strengths may be effectively employed to bring about interlayer attack. The acids or the like utilized with the oxidizing agents to form suitable oxidizing media or mixtures can also be employed in concentrations ranging from about 0.1 N to concentrated strengths.

In one embodiment, the oxidizing medium comprises sulfuric acid and an oxidizing agent such as nitric acid, perchloric acid, chromic acid, potassium permanganate, iodic or periodic acids or the like. One preferred oxidizing medium comprises sulfuric and nitric acids. The ratio of sulfuric acid to oxidizing agent, and more particularly, nitric acid can range from about 9 to 1 or higher to about 1 to 1. Likewise, various sulfuric and nitric acid concentrations can be employed, e.g. 0.1 N, 1.0 N, 10 N and the like. Generally, the concentrations of the sulfuric acid and nitric acid which can be effectively utilized range from about 0.1 N to concentrated strengths.

The treatment of graphite particles with oxidizing agents or oxidizing mixtures such as mentioned above is preferably carried out at a temperature between about room temperature and about 125°C and for periods of time sufficient to produce a high degree of interlayer attack. The treatment time will depend upon such factors as the temperature of oxidizing medium, grade or type of graphite treated, graphite particle size, amount of expansion desired and strength of the oxidizing medium.

The expanded graphite particles are then preferably rinsed with an aqueous solution. The rinsing or washing of the treated graphite particles with aqueous solutions may serve several functions. For instance, the rinsing or leaching removes harmful materials, e.g. acid, from the graphite particles so that it can be safely handled.

As indicated previously, the graphite particles are so treated and unrestrictedly expanded with a suitable oxidizing medium so that there is preferably produced expanded graphite masses having expansion ratios of at least 80 to 1 or higher. In other words, the expanded graphite particles have a thickness or "c" direction dimension which is at least 80 times that of the original "c" direction dimension. The expanded graphite particles are unitary, laminar structures having a vermiform appearance. The vermiform masses are pure, lightweight, anisotropic graphite.

The cathodes of the cell of this invention are formed by mixing the vermiform expanded graphite with the active cathode material. In addition, if desired, a minor amount of additional binder (e.g. polytetrafluoroethylene) may be added to the mixture. The mixture is then formed into a cathode by compression means well known to those skilled in the art of battery manufacture.

The cathodes of this invention comprise a major amount of monovalent and/or divalent silver oxide. However, it is within the scope of this invention to employ smaller amounts of other active materials, such as manganese dioxide, in the cathode.

The vermiform graphite comprises a minor amount of the cathode. Preferably the cathode is comprised of between about 0.5 and about 9 weight percent, most preferably about 1 weight percent, of vermiform expanded graphite, such weight percentage being based upon the total weight of the cathode.

The anode of the cell of this invention may be composed of any suitable material such as zinc, cadmium or indium. The preferred anode material is zinc.

The electrolytes which may be employed comprise aqueous alkaline solutions. The preferred electrolytes are aqueous potassium hydroxide and aqueous sodium hydroxide.

The cells of this invention which employ vermiform graphite as a conductive binder in the

0170411

cathode may contain increased amounts of active cathode material (and consequently exhibit increased performance) relative to cells employing other forms of graphite of equal purity. Although not wishing to be held to a particular theory, it is believed that the improved performance of the cells of this invention stems from the layered structure of the cathode produced when vermiform graphite is employed as the conductive material.

The present invention may be further described with reference to, and as illustrated, in the accompanying drawings, in which:-

Figure 1 is a scanning electron microscope ("SEM") photograph of a divalent silver oxide cathode containing 7 weight percent of graphite powder magnified 100 times;

Figure 2 is an SEM photograph of a divalent silver oxide cathode containing 7 weight percent of flaked vermiform graphite magnified 200 times; and

Figure 3 is an SEM photograph of a divalent silver oxide cathode containing 7 weight percent of vermiform graphite, magnified 100 times.

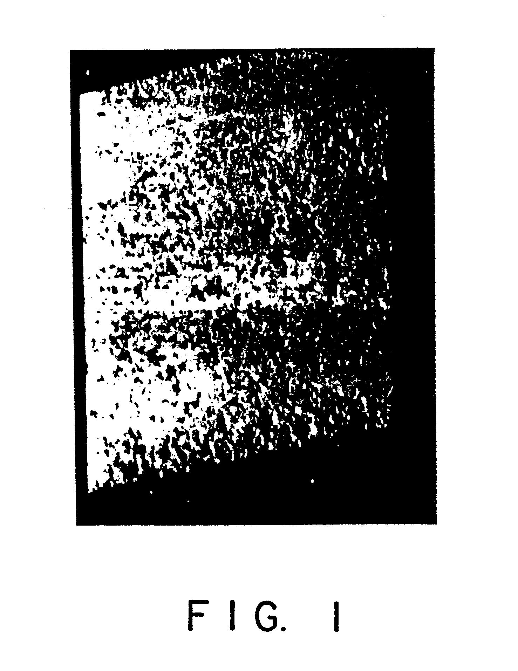

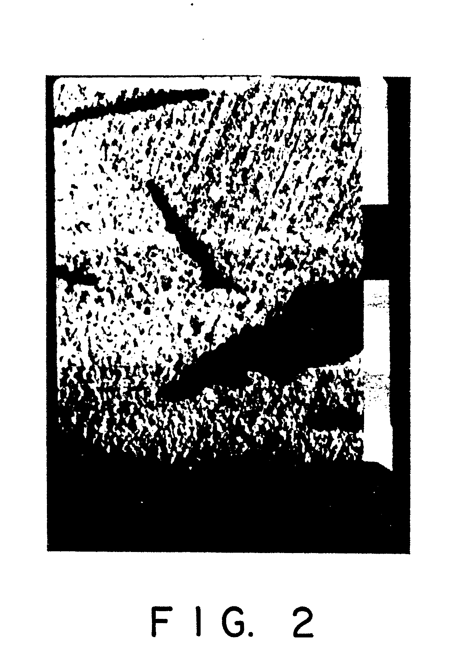

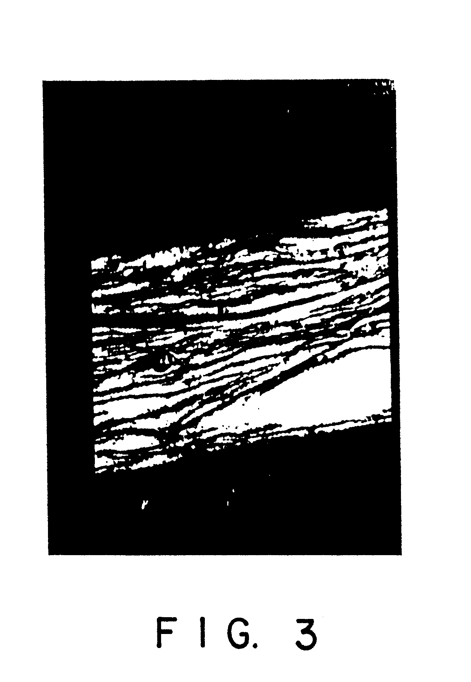

As is seen by examination of Figure 3, the vermiform graphite-containing cathode exhibits a structure of interlocked "fingers" resulting in a graphite-to-graphite contact throughout the cathode which extends to the sidewalls of the cell container. As is shown in Figures 1 and 2 such a layered structure is not formed when an identical amount of either particulate or flaked graphite is employed in the cathode.

The cells of this invention which employ divalent silver oxide and a minor amount of vermiform graphite exhibit improved pulse performance relative to similar cells employing identical amounts of other forms of graphite of equal purity. It is hypothesized that this improved pulse performance also stems from the layered cathode structure discussed above.

The present invention will now be further described with reference to, but is in no manner limited by the following Examples.

## Example 1

Several cathodes, each measuring 7.62mm in diameter and 0.42mm in height were produced with each containing the percentages and types of graphite and silver oxide shown in Table I. The resistivities across the cathodes heights were measured and the results are indicated in Table I.

### TABLE I
### Resistivities of Silver Oxide Cathodes

| Graphite | Weight Percent Graphite in Cathode | Resistivity (Ohms) | |
|---|---|---|---|
| | | AgO | $Ag_2O$ |
| | 0 | $2.74 \times 10^2$ | $6.07 \times 10^6$ |
| Powdered | 1 | $1.05 \times 10^2$ | $2.92 \times 10^6$ |
| | 7 | 0.40 | 0.34 |
| Vermiform (GTA)[2] | 1 | $4.4 \times 10^1$ | 7.13 |
| | 7 | 0.27 | 0.30 |

1 -- Powdered graphite from Lonza of a purity greater than or equal to that of GTA vermiform graphite.

2 -- A very pure grade material.

The above results indicate that lesser amounts of vermiform graphite are needed to produce desirable conductivity in both monovalent and divalent silver oxide cathodes.

## Example 2

Several lots of cells, each of which measured 0.79 cm (0.31 inch) in diameter and 0.16cm (0.063 inch) in height, were constructed. Each cell included .0065 gram of an electrolyte comprised of a 33 weight percent potassium hydroxide aqueous solution, a 0.064 gram anode comprised of zinc powder gel, a polyethylene/cellulosic separator and 0.12 gram of a cathode pellet comprised of 96 weight percent divalent silver oxide, 3 weight percent polytetrafluoroethylene, and 1 weight percent graphite of the purity and structure indicated in Table II. The cells were continuously stored at 25°C and were periodically subjected to a 100 ohm load for 2 seconds. The results of such testing are summarized in Table II.

TABLE II
Closed Circuit Pulse Voltage

| Cell Lot | Graphite | Number of Cells | Voltage Measured after Week[1] | | | |
| | | | 0 | 4 | 9 | 13 [5] |
|---|---|---|---|---|---|---|
| 1 | GTB[2]-Worms | 10 | 1.16 | 1.12 | 1.12 | (0.48) |
| A | GTB-Flake | 9 | 0.92 | 0.85 | 0.85 | (0.73) |
| B | Comitrol[3] Powder | 10 | 1.02 | 0.95 | 0.94 | (0.63) |
| 2 | GTC[4]-Worms | 10 | 1.08 | 1.03 | 1.02 | (0.66) |
| C | GTC-Flake | 10 | 1.00 | 1.00 | 1.02 | (0.91) |

1 Average value listed
2 GTB - medium grade purity material
3 Comitrol - Coke material ground to flour consistency. Material is of a purity about equal to that of GTB worm graphite.
4 GTC - Lower grade purity material.
5 Values for week 13 are not believed to be accurate because the cells exhibited substantial leakage at this point precluding accurate measurement.

The above data indicate that alkaline divalent silver oxide cells employing vermiform graphite as a conductive material in their cathode demonstrate improved pulse performance relative to cells employing equal amounts of graphite of other forms and of equal purity as conductive materials.
As is discussed above, the data from week 13 are
inaccurate as the cells had lost substantial amounts
of their electrolyte through leakage by this point.

. . . . . . . . . . . . . . . . . . . . . . . . . . . . . . . . . . . . . . . . . . . . . . . . . .

CLAIMS

1. A galvanic cell having an alkaline electrolyte, an anode, and a cathode comprising silver oxide, characterized in that the cathode further comprises a minor amount of vermiform expanded graphite.

2. A galvanic cell according to claim 1, wherein the cathode is comprised of between about 0.5 and about 9.0 weight percent vermiform expanded graphite.

3. A galvanic cell according to claim 2, wherein the cathode is comprised of about 1.0 weight percent vermiform expanded graphite.

4. A galvanic cell according to any of claims 1 to 3, wherein the silver oxide is selected from monovalent silver oxide and divalent silver oxide.

5. A galvanic cell according to any of claims 1 to 4, wherein the anode is selected from zinc, cadmium and indium.

6. A galvanic cell according to any of claims 1 to 5, wherein the electrolyte is selected from aqueous potassium hydroxide and aqueous sodium hydroxide.

7. A galvanic cell according to any of claims 1 to 6, wherein the cathode further comprises a minor amount of a second electrochemically active material.

8. A galvanic cell according to claim 7, wherein the second active material is manganese dioxide.

9. A galvanic cell according to any of claims 1 to 8, wherein the cathode further comprises an additional binder.

10. A galvanic cell according to claim 9, wherein the additional binder is polytetrafluoroethylene.

. . . . . . . . . . . . . . . . . . . . . . . . . . . . . . . . . . . . . . . . . . . . . . . . .

1/3

F I G. I

F I G. 2

F I G. 3

| | DOCUMENTS CONSIDERED TO BE RELEVANT | | EP 85304622.5 |
|---|---|---|---|

| Category | Citation of document with indication, where appropriate, of relevant passages | Relevant to claim | CLASSIFICATION OF THE APPLICATION (Int Cl 4) |
|---|---|---|---|
| D | US - A - 2 829 189 (COLEMAN et al.) | | H 01 M 4/62 |
| Y | * Column 2, lines 30-40 * | 1-4 | H 01 M 4/54 |
| A | * Column 2, lines 66-69 * | 6 | H 01 M 6/04 |
| | -- | | C 01 B 31/04 |
| Y | DE - A1 - 3 022 449 (BROWN, BOVERI) | 1-3 | |
| | * Claims 1,2 * | | |
| | -- | | |
| Y | CHEMICAL ABSTRACTS, vol. 96, no. 14, April 5, 1982, Columbus, Ohio, USA | 1-3 | |
| | JAPAN STORAGE BATTERY CO., LTD. "Lead-acid batteries." page 183, column 2, abstract-no. 107 218m | | |
| | & Jpn. Kokai Tokkyo Koho JP 81,159,063 | | **TECHNICAL FIELDS SEARCHED (Int Cl 4)** |
| | -- | | |
| A | GB - A - 2 019 079 (UNION CARBIDE) | 1,5 | H 01 M |
| | * Claims 1,13 * | | C 01 B |
| | -- | | |
| A | GB - A - 2 033 139 (MALLORY) | 1,7,8 | |
| | * Claims 1,5 * | | |
| | -- | | |
| A | DE - A - 2 161 373 (VARTA) | 1,9,10 | |
| | * Claims 1,5 * | | |
| | -- | | |
| D,A | US - A - 3 404 061 (SHANE et al.) | | |
| | -- | | |
| D,A | US - A - 3 494 382 (SHANE et al.) | | |
| | ---- | | |

The present search report has been drawn up for all claims

| Place of search | Date of completion of the search | Examiner |
|---|---|---|
| VIENNA | 04-10-1985 | LUX |